# EUROPEAN PATENT APPLICATION

(11) **EP 0 557 561 A1**
(43) Date of publication of application: **01.09.1993**
(21) Application number: 92103410.4
(22) Date of filing: 28.02.1992
(51) Int. Cl.: H04L 25/49

(54) **Serial data link utilising NRZI and Manchester code**

(71) Applicant: International Business Machines Corporation, Armonk, N.Y. 10504 (US)
(72) Inventor: Kohler, Helmut, Dipl.-Ing. GH, W-7256 Mönsheim (DE); Köhler, Thomas, Dipl.-Ing., W-7038 Holzgerlingen (DE); Gervais, Gilles, Dipl.-Ing., W-7039 Breitenstein (DE); Schumacher, Norbert, Dipl.-Ing., W-7531 Neuhausen (DE)
(74) Representative: Schäfer, Wolfgang, Dipl.-Ing.

(57) **Abstract**

An apparatus for the transmission of data over a serial link is described. It comprises a direct memory access controller (10, 60) which extracts the data from a memory (80, 90) and passes it to a serial network interface (20, 50). The serial network interface (20, 50) carries out non-return-on-zero-invert-on-one (NRZI) and Manchester coding on the data before passing the data onto a transmitter (30, 40). The data is transmitted over a serial link (70) to a receiver (30, 40) from whence it is decoded in another serial network interface (20, 50) and passed using another direct memory access controller (10, 60) to another memory (80, 90).

## Description

### Field of the Invention

The invention concerns a method and an apparatus for the transmission of data over a serial data link.

### Prior Art

A number of different methods for transmitting data between two stations over a serial data link are known. These are summarised in the German language publications "Datenkommunikation und lokale Netzwerke" (Data communication and local networks) by Hans Peter Blomeyer-Bartenstein and Rüdiger Both published by Markt & Technik, Haar bei München, 1985 and "Lokale PC-Netzwerke und Kommunikation" (Local PC networks and communications) published as a special issue by the magazine CHIP.

Two of the most common of these methods are the Ethernet and the Token Ring. Both of these methods are in widespread use. However, for their implementation, they both require dedicated software, expensive transmission equipment (such as modems) and are limited in their data transfer rate.

### Summary of the invention

The aim of the invention is therefore to develop a low-cost, high transfer rate device for transmitting data serially over a serial data link.

This is achieved by having a direct memory access controller for communicating with a memory in which the data is stored, a serial network interface for encoding the data received from the direct memory access controller using non-return-on-zero-invert-on-one (NRZI) and Manchester codes, a receiver connected to the serial network interface and the serial link for receiving the data and a transmitter connected to the serial network interface and the serial link for transmitting the data.

In one embodiment of the invention, the direct memory access controller comprises buffers which are connected through serial ports to the serial network interface and by a parallel bus to the memory.

The invention may further include an interrupt controller which is connected to the transmitter/receiver pair for sensing interrupts in the reception and transmission of the data and which is connected to the memory, direct memory access controller and to the first microprocessor. The interrupt controller takes appropriate action when said interrupts are sensed.

The invention also comprises a method for transmitting data across a serial link comprising the following steps: fetching data from a memory, non-return-on-zero-invert-on-one (NRZI) encoding the fetched data to produce an NRZI encoded data signal, Manchester encoding the NRZI data signal to produce a data signal for transmission across the serial link, Manchester decoding the data signal sent across the serial link to produce a Manchester decoded signal and a clock signal, NRZI decoding the Manchester decoded signal using said clock signal to produce received data and storing said received data in a memory. The fetched data may be sent in the form of frames across the serial link.

The invention is more fully described by means of the figures and detailed description.

### Description of the Figures

- Fig. 1: shows a block diagram illustrating the main components of the invention.
- Fig. 2: shows a detailed diagram of the serial network interface.
- Fig. 3: illustrates the principles of NRZI coding.
- Fig. 4: illustrates the principles of Manchester encoding.
- Fig. 5: shows a detailed diagram of the direct memory access controller.
- Fig. 6: shows one embodiment of the invention.

### Detailed Description of the Invention

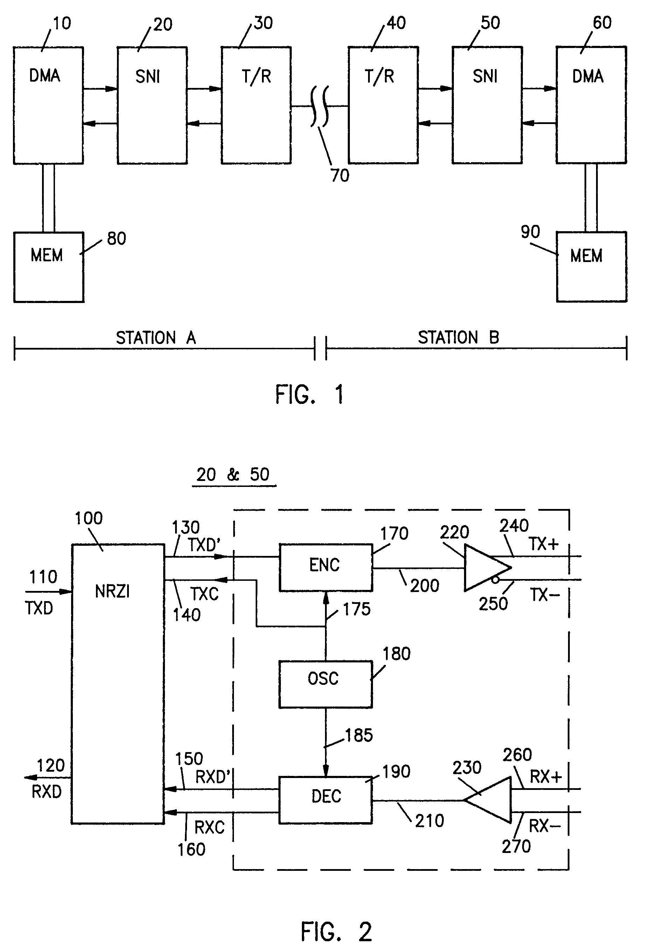

Fig. 1 shows a block diagram outlining the main features of the invention. The first station, station A, from which data is transmitted or in which data is received is shown on the left hand side of the figure. It comprises a direct memory access controller 10 connected to a serial network interface 20 which is in turn connected to a transmitter/receiver pair 30. The second station, station B, from which data is transmitted or in which data is received is shown on the right hand side of the figure. It also comprises a direct memory access controller 60 connected to a serial network interface 50 which is in turn connected to a transmitter/receiver pair 40. The two direct memory access controllers 10 and 60, the two serial network interfaces 20 and 50 and the two transmitter/receiver pairs 30 and 40 are constructionally identical. They, of course, operate differently depending on whether they are in receive or transmit mode. The two direct memory access controllers 10 and 60 are connected to memories 80 and 90 from which data is to be read or into which data is to be written.

The data is transmitted along a serial link 70. The serial link 70 may be made of any suitable components. For example, it may comprise a twisted pair of lines, in which case the transmitter/receiver pairs 30, 40 would be pulse transformers, or it may comprise an optical fibre, in which case the transmitter/receiver pairs 30, 40 would be optical converters.

Fig. 2 shows a detailed circuit diagram of the serial network interface 20 or 50. It comprises a non-return-on-zero-invert-on-one (NRZI) device 100, a Manchester encoder 170, a clock circuit 180, a Manchester decoder 190 and two driver circuits 220 and 230.

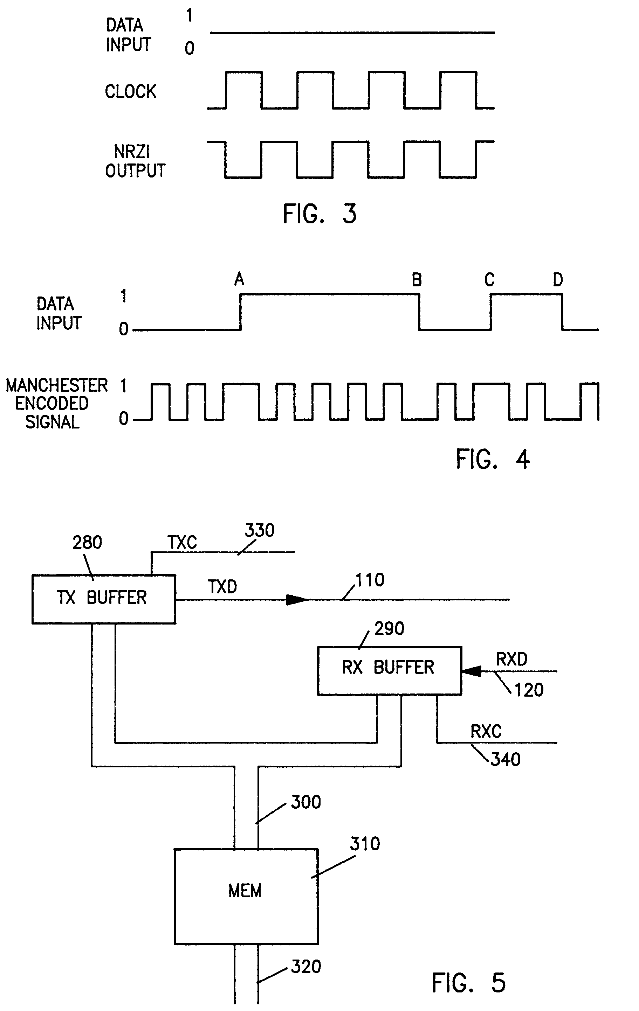

The NRZI device 100 is well known in the art. It acts as an encoder as well as an decoder. It is used to ensure a proper synchronisation of the Manchester encoder 170. For example, it converts a series of incoming ones into a zero/one ripple. Fig. 3 shows an example of NRZI coding. The top line shows an incoming data signal which comprises a series of incoming ones. The second line shows the clock signal provided to the NRZI device 100 and the bottom line shows the resulting output signal from the NRZI device 100.

Manchester decoders 190 and encoders 170 are also known in the art. For example US-A-4 603 322 describes an implementation of one such decoder. The Manchester decoder 190 and encoder 170 are also commercially available combined on the same chip together with a clock circuit. An example of one such circuit is the National Semiconductor DP8391A/NS32491A Serial Network Interface for IEEE 802.3 Ethernet/Cheapernet type local area networks.

The principle of Manchester encoding is to introduce phase shifting in a carrier wave which is continuously switching, such that logic input changes are represented by a phase shift of the carrier wave. If data at the input of the Manchester encoder switches from a logic high to a logic low, then a phase shift of 180° is performed. When a low-to-high transition occurs at the input to the Manchester encoder, then the carrier phase is switched back to the original phase.

An example of this is shown in Fig. 4 in which a logic high is encoded as a zero phase shift and a logic low as a 180° phase shift from a reference. The result is that in the encoded signal, two successive highs or two successive lows represent a positive or negative data transition in the data input. When the input data in Fig. 4 toggles low to high, as shown at positions A and C, then the encoded output signal gives two successive high levels as the phase of the carrier shifts by 180°. The transition of data from high to low will generate two successive low outputs in the encoded signal, as shown at positions B and D in the figure, thus returning the signal to the original phase.

In the Manchester encoded signal, both data signals and clock signals are embedded. In a Manchester decoder, the clock information may be easily extracted from the encoded waveform using phase-locked loop techniques, as known in the art, and the extracted clock signal can be used to recover the encoded data. The data can therefore be resynchronised on reception.

Returning now to Fig. 2, it can be seen that the clock signal produced by the clock circuit 180 is passed to the Manchester encoder 170 through line 175 and to the Manchester decoder 190 through line 185. The clock circuit 180 also provides a clock signal TXC to the NRZI device 100 along line 140. A further clock signal RXC, extracted from the received Manchester encoded signal, is provided to the NRZI device 100 from the Manchester decoder 190 along line 160.

The Manchester encoder 170 is connected to the NRZI device 100 through a line 130 and to the input of a driver circuit 220. The driver circuit has two outputs, one of which is inverted, and both of which are connected to the transmitter circuits in the transmitter/receiver 30 or 40 by lines 240 and 250.

The output of the Manchester decoder 190 is connected to the NRZI device 100 by two lines 150 and 160. Line 150 carries the data signal RXD' and the other line 160 carries a clock signal RXC extracted as described above. The input of the Manchester decoder 190 is connected to the output of a receiver circuit 230 by line 210. The inputs of the receiver circuit 230 are connected to the receiving circuits of the receiver/transmitter pair 30, 40 by lines 260 and 270.

The NRZI device 100 is, as described above, connected to the Manchester encoder 170 by line 130, to the Manchester decoder by lines 150 and 160 and to the clock circuit 180 by line 140. The NRZI device 100 is also connected to the direct memory access controller 10 or 60 by lines 110 and 120.

The operation of the serial network interface will now be described. Data signal TXD for transmission is received from the direct memory access controller 10 or 60 along line 110 and undergoes an NRZI encoding in the NRZI device 100 in order to assure proper synchronisation of the transmission. The clock signal TXC for the encoding is supplied from the clock circuit 180 along line 140. The NRZI encoded data signal TXD' is then supplied along line 130 to the Manchester encoder 170 where it undergoes Manchester encoding as described above. The Manchester encoded signal is transferred from the Manchester encoder 170 to the driver circuit 220 along line 200. The driver circuit produces a pair of transmit driver signals, TX+ and TX-, which are transferred along lines 240 and 250 respectively to the transmitter circuits of the transmitter/receiver 30. The transmitter/receiver 30 converts the signals into a form suitable for transmission on the serial link 70.

The transmitted signal is received by the receiving circuits of the transmitter/receiver pairs 30, 40 where it is converted to a pair of signals, RX+ and RX-, along lines 260 and 270 respectively to the receiver circuit 230. From the receiver circuit 230, the signal is sent to the Manchester decoder 190. In the Manchester decoder 190 it is decoded into a data signal RXD' and the clock signal RXC is extracted using the clock signal from the clock circuit 180 and phase-locked loop techniques as described above. The data signal RXD' is sent along line 150 and the clock signal RXC is sent along line 160 to the decoder portion of NRZI device 100 where they are used to recover the original data. The recovered data RXD is transferred along line 120 to the direct memory access controller 10, 60.

Fig. 5 shows the main features of the direct memory access controllers 10, 60. The output of a transmission data buffer 280 is connected to line 110 going to the serial network interface 20, 50 and the input of a reception data buffer 290 is connected to line 120 coming from the serial network interface 20, 50. The transmission data buffer 280 and the reception data buffer 290 are both constructed from first-in-first-out memory buffers. The input of the transmission data buffer 280 and the output of the reception data buffer 290 are connected through a bidirectional data bus 300, normally a parallel one, to a buffer memory 310 which is in turn connected to the memory 80, 90 through a bidirectional data bus 320. The buffer memory 310 can be dispensed with, in which case, the data bus 300 is connected directly to the memory 80, 90.

The direct memory access controller 10, 60 has two clock signals TXC and RXC provided to it from the serial network interface 20, 50. Clock signal TXC is carried on line 330 and clocks the transmission data buffer 280 and other circuitry associated with transmission of the data. Clock signal RXC is carried on line 340 and clocks the reception data buffer 290 and other circuitry associated with reception of the data. The interface between the transmission data buffer 280 and the reception data buffer 290 and the data bus 300 is clocked by a system clock (not shown).

Not shown in Fig. 5 is the microprocessor which controls the fetching of data from the memory 80, 90 into the transmission data buffer 280 and the passing of the data from the reception data buffer 290 to the memory 80, 90. The microprocessor sets up specification tables which control the length and format of the frames transferred to and from the memory 80, 90, as well as indicating the addresses at which the data is to be written to or read from. Such operations are well known in the art and are described, for example, in the User's Manual to the Motorola MC68605 X.25 Protocol Controller. The microprocessor is clocked by the system clock (not shown).

Data for transmission is fetched from the memory 80, 90 via the memory buffer 310 if it is present, along the data bus 300 and placed into the transmission data buffer 280. The appropriate control codes and frame descriptors required are added to the data in the transmission data buffer 280 by the not shown microprocessor and then the complete contents of the transmission data buffer 280 are serialised and transferred as a data frame out of the serial port of the transmission data buffer 280 as data signal TXD on line 110. The data signal TXD is passed to the serial network interface 20, 50 and coded as described above.

Data is received for transfer to the memory at the serial port of the reception data buffer 290 on line 120 as data signal RXD from the serial network interface 20, 50. The received frame of data is deserialised, stripped of control codes and frame descriptors and the deserialised data is passed along the data bus 300 into the memory 80, 90.

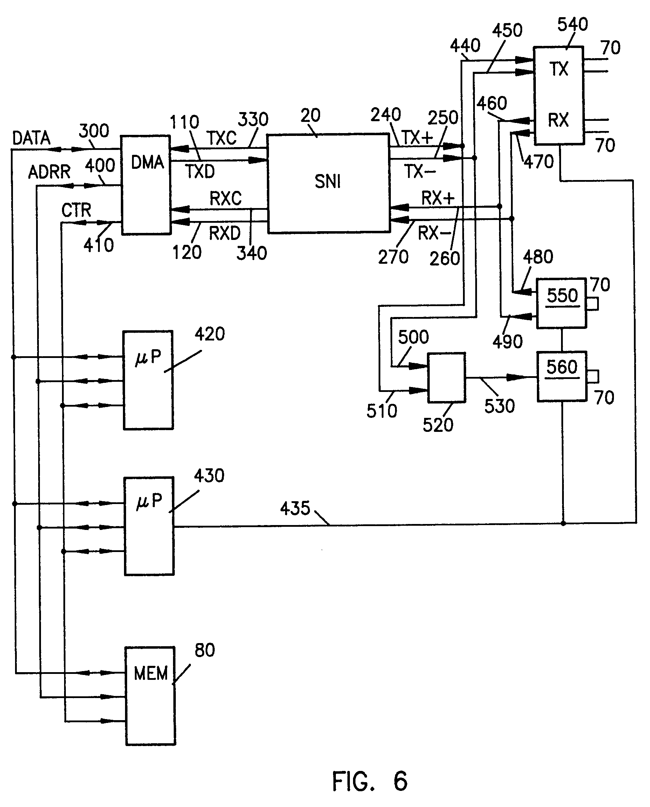

One embodiment of the invention is shown in Fig. 6. For simplicity only the left hand station, station A, of Fig. 1 is shown. In the figure, components corresponding to components described in earlier figures are given the same reference signs. Fig. 6 additionally shows a microprocessor, 420 and an interrupt controller 430 respectively. The microprocessor 420 is the not shown microprocessor of Fig. 5. It is connected to the direct memory access controller 10 and to the memory 80 through the data bus 300, an address bus 400 and a control bus 410. The address bus 400 carries signals concerning the address from which data in the memory 80 is to be transferred to the direct memory access controller 10 or vice versa. The control bus 410 carries control signals relating to the transfer of data between the memory 80 and the direct memory access controller 410.

The interrupt controller 430 receives signals on line 435 relating to interrupts from the data transmission and reception. Such interrupts could be the loss of a carrier signal on the serial link 70 or the loss of light in a fibre optic cable. The interrupt controller 430 is connected through the data bus 300, the address bus 400 and the control bus 410 to the direct memory access controller 10, the microprocessor 420 and the memory 80. When an interrupt is detected, the interrupt controller 430 carries out the appropriate action to ensure the integrity of the data. The Motorola MC68901 is one implementation of the interrupt controller 430. However, other proprietary components may also be used.

In Fig. 6, two possible implementations of the transmitter/receiver 30 are shown. The first one is shown in the top right hand corner of the figure and comprises a transmitter/receiver pair 540 for a serial link 70 comprising a twisted pair of lines. The transmission ports of the transmitter/receiver pair 540 are connected by lines 440 and 450 to lines 240 and 250 carrying data signals TX+ and TX-respectively. The reception ports of the transmitter/receiver pair 540 are connected by lines 460 and 470 to lines 260 and 270 carrying the RX+ and RX- data signals respectively.

The second implementation of the transmitter/receiver pair 30 is shown in the middle right hand side of the figure. It comprises an optical transmitter 560 and an optical receiver 550 connected to a fibre optic cable pair forming the serial link 70. The optical receiver decodes the incoming signal into data signals RX+ and RX- and transfers them on lines 480 and 490 to lines 260 and 270 respectively. The optical transmitter 560 has a level converter 520 connected to it by a line 530. The function of the level converter 520, which is connected by lines 500 and 510 to lines 250 and 240 respectively, is to turn the data signals TX+ and TX- into a level suitable for conversion in the optical transmitter 560 to optical signals for transmission on the serial link 70. One example of the implementation of the optical receiver 550 and the optical transmitter 560 is the AT&T ODL50. However, other components may be used.

Line 435 connects the transmitter/receiver pair 540, the optical transmitter 560 and the optical receiver 550 to the interrupt controller 430. Should there be a break in transmission and/or reception of the signal, then the appropriate interrupt is sent to the interrupt controller 430 for handling.

## Claims

1. Apparatus for the transmission of data over a serial link (70) comprising
a direct memory access controller (10, 60) for communicating with a memory (80, 90) in which the data is stored;
a receiver (30, 40) connected to a serial network interface (20, 50) and the serial link (70) for receiving the data; and
a transmitter (30, 40) connected to the serial network interface (20, 50) and the serial link (70) for transmitting the data,
whereby the serial network interface (20, 50) encodes the data received from the direct memory access controller (10, 60) and decodes data from the receiver (30, 40) using non-return-on-zero-invert-on-one (NRZI) and Manchester codes.

2. Apparatus according to claim 1 wherein the serial network interface (20, 50) comprises
an NRZI device (100) which receives the data signal (TXD) from the direct memory access controller (10, 60) and NRZI encodes the data;
a Manchester encoder (170) connected to a clock circuit (180) which receives the NRZI encoded data signal (TXD') from the NRZI device (100) and Manchester encodes it; and
driver circuit (220) which receives the Manchester encoded data signal from the Manchester encoder and passes the Manchester encoded data signal (TX+, TX-) to the transmitter (30, 40).

3. Apparatus according to claim 1 or 2 wherein the serial network interface (20, 50) comprises
a receiver circuit (230) which receives the data signal (RX+, RX-) from the receiver (30, 40);
a Manchester decoder (190) which receives the data signal from the receiver circuit (230) and a clock signal from a clock circuit (180) and derives a received data signal (RXD') and a received clock signal (RXC); and
an NRZI device (100) which accepts the received data signal (RXD') and the received clock signal (RXC) from the Manchester decoder (190), NRZI decodes the received data signal (RXD') and passes the decoded data signal (RXD) to the direct memory access controller (10, 60).

4. Apparatus according to claim 1, 2 or 3 wherein the direct memory access controller (10, 60) comprises
a transmission data buffer (280) connected to a parallel data bus (300) into which is written the data to be transmitted from the memory (80, 90) and out of which is passed a data signal (TXD) to the serial network interface (20, 50); and
a first microprocessor (420) connected to the transmission data buffer (280) and the memory (80, 90) for controlling the transmission of the data.

5. Apparatus according to anyone of the claims 1 - 4 wherein the direct memory access controller (10, 60) comprises
a reception data buffer (290) connected to a parallel data bus (300) into which is written a received data signal (RXD) from the serial network interface (20, 50) and out of which is passed the data to the memory (80, 90); and
a microprocessor (420) connected to the reception data buffer (290) and the memory (80, 90) for controlling the reception of the data.

6. Apparatus according to anyone of the claims 1 - 5 wherein
the transmitter/receiver pair (30, 40) comprises a transmitter/receiver pair (540) for passing signals down a twisted pair of lines and receiving signals from a twisted pair of lines; and
the serial link (70) is a twisted pair of lines.

7. Apparatus according to anyone of the claims 1 - 5 wherein
the transmitter/receiver pair (30, 40) comprises an optical receiver (550) and an optical transmitter (560) connected to a level converter (520); and
the serial link (70) is a fibre optic cable.

8. Apparatus according to anyone of the preceding claims additionally comprising
an interrupt contoller (430) connected to the transmitter/receiver (30, 40) for sensing interrupts in the reception and transmission of the data and connected to the memory (80, 90), direct memory access controller (10, 60) and to the microprocessor (420) for taking appropriate action when said interrupts are sensed.

9. Method for transmitting data across a serial link (70) comprising the following steps:
fetching data (TXD) from a memory (80, 90);
non-return-on-zero-invert-on-one (NRZI) encoding the fetched data (TXD) to produce an NRZI encoded data signal (TXD');
Manchester encoding the NRZI data signal (TXD') to produce a data signal (TX+, TX-) for transmission across the serial link (70);
Manchester decoding the data signal (RX+, RX-) sent across the serial link (70) to produce a Manchester decoded data signal (RXD') and a clock signal (RXC);
NRZI decoding the Manchester decoded data signal (RXD') using said clock signal (RXC) to produce received data (RXD); and
storing said received data (RXD) in a memory (80, 90).

10. Method according to claim 9 wherein
the fetched data (TXD) is sent in the form of frames across the serial link (70).
